# EUROPEAN PATENT APPLICATION

(11) **EP 4 738 862 A1**
(43) Date of publication of application: **06.05.2026**
(21) Application number: 24848602.9
(22) Date of filing: 11.04.2024
(51) Int. Cl.: H04N 23/60, G03B 15/00

(54) **AUTOMATIC IMAGING SYSTEM, AUTOMATIC IMAGING METHOD, PROGRAM, AND COMPUTER-READABLE RECORDING MEDIUM STORING PROGRAM**

(30) Priority: 31.07.2023 JP 2023124654
(71) Applicant: JFE Steel Corporation, Tokyo, 100-0011 (JP)
(72) Inventor: NAGAYA, Hiroki, Tokyo 100-0011 (JP); ISHIGAKI, Yusuke, Tokyo 100-0011 (JP); NISHINA, Yoshiaki, Tokyo 100-0011 (JP)
(74) Representative: Grünecker Patent- und Rechtsanwälte PartG mbB
(86) International application number: PCT/JP2024/014713
(87) International publication number: WO 2025/027941

(57) **Abstract**

Provided is an automatic imaging system, an automatic imaging method, a program, and a computer-readable recording medium storing the program, each of which enables high-quality image-capture of scrap with no risk of image blurring at a given position during conveyance of the scrap. An automatic imaging system (1) automatically captures an image of scrap (S) that is conveyed and moved by a conveyance unit (50). The automatic imaging system (1) includes: an imaging device (30) configured to capture an image of the scrap (S); a conveyance speed detecting unit (10) configured to detect a conveyance speed of the scrap (S); and a control device (20) configured to determine whether or not the conveyance speed of the scrap (S) which conveyance speed is detected by the conveyance speed detecting unit (10) is equal to or lower than a predetermined value and to control the imaging device (30) to capture an image of the scrap (S) when the conveyance speed of the scrap (S) is determined to be equal to or lower than the predetermined value.

## Description

### Technical Field

The present invention relates to an automatic imaging system, an automatic imaging method, a program, and a computer-readable recording medium storing the program, each of which makes it possible to automatically capture an image of scrap that is conveyed and moved by a conveyance unit.

### Background Art

Generally, in steel works or the like, at the time of receiving scrap, determination of the grade of scrap, detection of unwanted materials (materials that should be removed, e.g., foreign material), and the like are performed. When scrap is melted in a melting furnace, the chemical composition of the scrap is analyzed each time to adjust the scrap ratio.

Here, for example, a monitoring system described in PTL 1 has been known in the related art as a monitoring system capable of accurately distinguishing an unwanted material without omission even in a case where the presence or absence of the unwanted material contained in iron scrap is automatically determined.

The monitoring system described in PTL 1 includes: an imaging unit configured to capture a plurality of images of the iron scrap at different viewpoints or at different times; an unwanted material specifying unit configured to input the plurality of images captured by the imaging unit into a predetermined learning model to specify each of a type and a position of an unwanted material and a probability of being an unwanted material; and an output unit configured to output each of the type and position of the unwanted material when the probability specified by the unwanted material specifying unit has exceeded a predetermined threshold. Here, the iron scrap is kept in motion by a conveyance device, and the iron scrap being conveyed is an imaging target for a single or a plurality of cameras constituting the imaging unit.

In the meantime, a scrap image capture system described in PTL 2 has been known in the related art as a scrap image capture system for generating a still image every time iron scrap is lifted by a lifting device, for example.

The scrap image capture system described in PTL 2 includes: a crane configured to lift the iron scrap by the lifting device and convey the iron scrap; and a camera configured to capture an image of a region including the lifting device and generate a still image when the lifting device reaches a predetermined height.

### Citation List

### Patent Literatures

PTL 1: WO 2022/260133
PTL 2: JP 2021-76711 A

### Summary of Invention

### Technical Problem

However, the monitoring system described in PTL 1 and the scrap image capture system described in PTL 2 in the related art have the following problems.

That is, in the case of the monitoring system described in PTL 1, an image of the iron scrap during conveyance, that is, the scrap moving at a predetermined speed is captured, so that the image of the scrap may not be captured at the appropriate time. Particularly, in a case where the scrap moves at a speed equal to or higher than the panning speed of the camera, there are problems that a captured image of the scrap is blurred and the camera fails to capture an image of the scrap thus moving.

In contrast, in the case of the scrap image capture system described in PTL 2, an image of a region including the lifting device is captured when the lifting device reaches a predetermined height. Because of this, an image of the scrap can be captured at the appropriate time, and the captured image of the scrap is less likely to be blurred. However, only the image of the scrap when the lifting device reaches the predetermined height can be captured, and an image of the scrap at a given position cannot be captured.

In view of this, the present invention is achieved in order to solve these problems in the related art, and an object of the present invention is to provide an automatic imaging system, an automatic imaging method, a program, and a computer-readable recording medium storing the program, each of which enables high-quality image-capture of scrap with no risk of image blurring at a given position during conveyance of the scrap.

### Solution to Problem

In order to achieve the above object, an automatic imaging system according to one aspect of the present invention is an automatic imaging system for automatically capturing an image of scrap conveyed and moved by a conveyance unit. The automatic imaging system is summarized as including: an imaging device configured to capture an image of the scrap; a conveyance speed detecting unit configured to detect a conveyance speed of the scrap; and a control device configured to determine whether or not the conveyance speed of the scrap, detected by the conveyance speed detecting unit, is equal to or lower than a predetermined value and to control the imaging device to capture an image of the scrap when the conveyance speed of the scrap is determined to be equal to or lower than the predetermined value.

An automatic imaging method according to another aspect of the present invention is an automatic imaging method for automatically capturing an image of scrap that is conveyed and moved by a conveyance unit. The automatic imaging method is summarized as including: a conveyance speed detecting step of a conveyance speed detecting unit detecting a conveyance speed of the scrap; a determination step of a control device determining whether or not the conveyance speed of the scrap which conveyance speed is detected in the conveyance speed detecting step is equal to or lower than a predetermined value; and an imaging control step of the control device controlling an imaging device to capture an image of the scrap when it is determined, in the determination step, that the conveyance speed of the scrap is equal to or lower than the predetermined value.

A program according to another aspect of the present invention is a program causing a control device to execute: a determination step of determining whether or not a conveyance speed of scrap which conveyance speed is detected by a conveyance speed detecting unit is equal to or lower than a predetermined value; and an imaging control step of controlling an imaging device to capture an image of the scrap when it is determined, in the determination step, that the conveyance speed of the scrap is equal to or lower than the predetermined value.

A computer-readable recording medium storing a program according to another aspect of the present invention is a computer-readable recording medium storing a program causing a control device to execute: a determination step of determining whether or not a conveyance speed of scrap which conveyance speed is detected by a conveyance speed detecting unit is equal to or lower than a predetermined value; and an imaging control step of controlling an imaging device to capture an image of the scrap when it is determined, in the determination step, that the conveyance speed of the scrap is equal to or lower than the predetermined value.

### Advantageous Effects of Invention

With the automatic imaging system, the automatic imaging method, the program, and the computer-readable recording medium storing the program according to the present invention, it is possible to capture a high-quality image of scrap with no risk of blurring at a given position during transport of the scrap.

### Brief Description of Drawings

FIG. 1 is an overall configuration diagram of an automatic imaging system according to a first embodiment of the present invention;
FIG. 2 is a functional block diagram of the automatic imaging system illustrated in FIG. 1;
FIG. 3 is a flowchart to describe the flow of a process in the automatic imaging system illustrated in FIG. 1;
FIG. 4 is a view to describe one example of a hardware configuration of a control device;
FIG. 5 is an overall configuration diagram of an automatic imaging system according to a second embodiment of the present invention;
FIG. 6 is a functional block diagram of the automatic imaging system illustrated in FIG. 5;
FIG. 7 is a flowchart to describe the flow of a process in the automatic imaging system illustrated in FIG. 5;
FIG. 8 is a view illustrating an example of image-capture at the time of receiving scrap in a scrap yard and illustrating an example of capturing an image of the scrap during unloading from a dump truck;
FIG. 9 is a view illustrating an example of image-capture at the time of receiving scrap in a scrap yard and illustrating an example in which images of scrap lifted by a lifting magnet and scrap remaining in a semi-trailer are captured in a case where scrap conveyed by the semi-trailer is lifted by the lifting magnet;
FIG. 10 is a view illustrating an example of image-capture at the time when scrap is stored in a scrap yard and illustrating an example in which an image of a scrap pile stored in the scrap yard is captured; and
FIG. 11 is a view illustrating an example of image-capture at the time of discharging scrap from a scrap yard and illustrates an example in which, at the time when scrap is put into a furnace via a basket from the scrap pile, images of the scrap pile, scrap lifted by the lifting magnet, scrap put into the basket, and scrap put into the furnace are captured.

### Description of Embodiments

The following describes embodiments of the present invention with reference to the drawings. The embodiments described below describe a device or a method to embody the technical idea of the present invention, and the technical idea of the present invention does not specify the quality, shape, structure, arrangement, and the like of components to those of the embodiments described below.

Further, the drawings are schematic. Accordingly, it should be noted that the relationship, ratio, and the like between thickness and planar dimension are different from actual ones, and the drawings include parts having a different dimensional relationship or ratio.

### (First Embodiment)

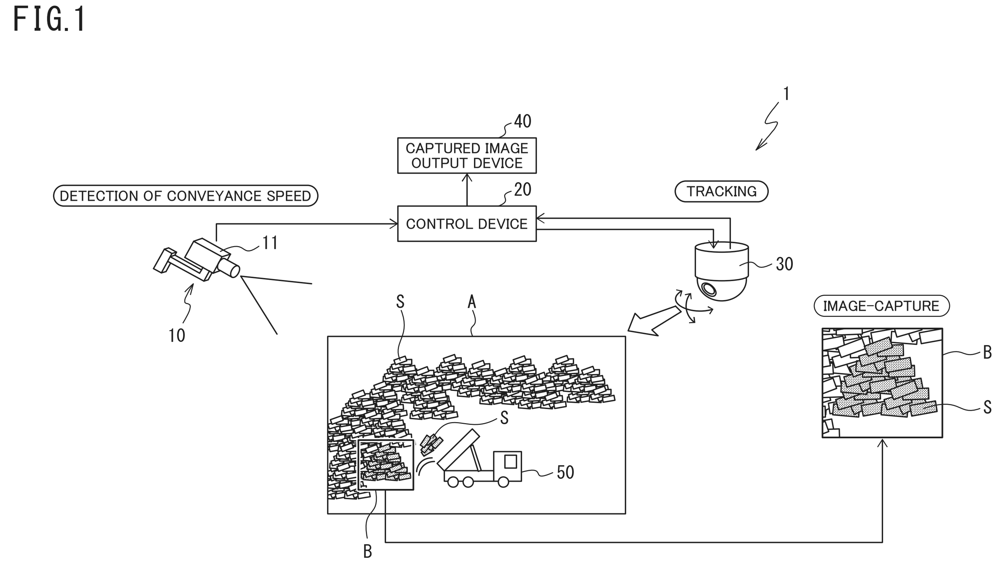

FIG. 1 is an overall configuration diagram of an automatic imaging system according to a first embodiment of the present invention.

The automatic imaging system 1 illustrated in FIG. 1 is configured to automatically capture an image of scrap S that is conveyed and moved by a dump truck 50 as a conveyance unit.

The automatic imaging system 1 includes a PTZ (Panoramac·Tilt·Zoom) camera 30 as an imaging device configured to capture an image of the scrap S, a conveyance speed detecting unit 10 configured to detect the conveyance speed of the scrap S, a control device 20, and a captured image output device 40.

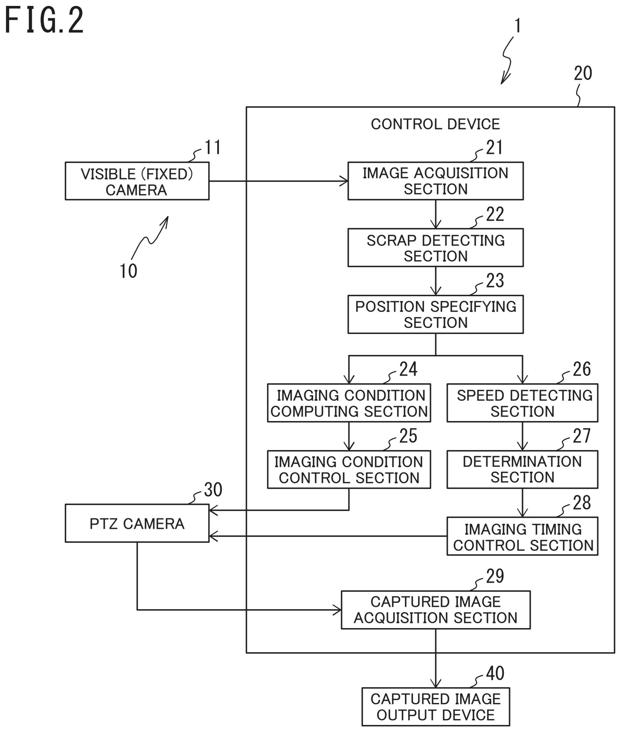

First, the PTZ camera 30 has a PTZ function (Pan-Tilt-Zoom function) and is capable of panning horizontally and vertically at a predetermined speed by remote control. The PTZ camera 30 also has a zoom in/out function and captures an image of the scrap S. The PTZ camera 30 is controlled by an imaging condition control section 25 (see FIG. 2) to track the scrap S under imaging conditions for the PTZ camera 30 which imaging conditions are determined by an imaging condition computing section 24 (see FIG. 2) (described later) of the control device 20. When a determination section 27 (described later) of the control device 20 determines that the conveyance speed of the scrap S is equal to or lower than a predetermined value, the PTZ camera 30 is controlled by an imaging timing control section 28 to capture an image of the scrap S such that the PTZ camera 30 captures an image of the scrap S under the imaging conditions for the PTZ camera 30, such as an imaging direction and a zoom ratio, determined by the imaging condition computing section 24 (see FIG. 2). In the present embodiment, as illustrated in FIG. 1, the PTZ camera 30 captures an image of an imaging region B including the scrap S unloaded at a scrap yard by raising a dump bed at the time when the dump truck 50 stops and the conveyance speed of the scrap S conveyed by the dump truck 50 becomes 0 m/s.

The conveyance speed detecting unit 10 is configured to detect the conveyance speed of the scrap S. As illustrated in FIGS. 1, 2, the conveyance speed detecting unit 10 includes a visible camera 11 fixed and configured to capture a plurality of images of a whole area A of the scrap yard as an imaging target, and an image acquisition section 21, a scrap detecting section 22, a position specifying section 23, and a speed detecting section 26 (described later) of the control device 20.

The visible camera 11 is fixed to a fixing member (not illustrated) so that the whole area A of the scrap yard is within its field of view, and the visible camera 11 captures a plurality of images of the whole area A of the scrap yard regardless of whether the scrap S is present in the scrap yard or not. A method for capturing images with the visible camera 11 is not limited particularly and may be a method for intermittently or continuously capturing still images or a method for capturing video and generating still images therefrom. As illustrated in FIG. 1, the scrap S is conveyed by the dump truck 50 as a conveyance unit. The dump truck 50 stops at the scrap yard and unloads the scrap S into the scrap yard by raising the dump bed. In this case, the visible camera 11 captures a plurality of images of the whole area A of the scrap yard, so that a plurality of images of the scrap S that is conveyed and moved by the dump truck 50 can be obtained. Based on the plurality of images of the scrap S, the conveyance speed of the scrap S is detected by the image acquisition section 21, the scrap detecting section 22, the position specifying section 23, and the speed detecting section 26 of the control device 20. Detailed configurations and functions of the image acquisition section 21, the scrap detecting section 22, the position specifying section 23, and the speed detecting section 26 of the control device 20 will be described later.

The control device 20 has a function to determine whether or not the conveyance speed of the scrap S which conveyance speed is detected by the conveyance speed detecting unit 10 is equal to or lower than a predetermined value and to control the PTZ camera 30 as an imaging device to capture an image of the scrap S when it is determined that the conveyance speed of the scrap S is equal to or lower than the predetermined value. The control device 20 also has a function to compute and determine imaging conditions for the PTZ camera 30 as the imaging device based on the position of the scrap S in each image which position is specified by the position specifying section 23 of the conveyance speed detecting unit 10 and to control the PTZ camera 30 to track the scrap S under the determined imaging conditions for the PTZ camera 30. The control device 20 also has a function to output a captured image acquired by the PTZ camera 30 to the captured image output device 40.

As illustrated in FIG. 2, the control device 20 includes the image acquisition section 21, the scrap detecting section 22, the position specifying section 23, and the speed detecting section 26 constituting the conveyance speed detecting unit 10. The control device 20 includes the determination section 27 and the imaging timing control section 28. The control device 20 also includes the imaging condition computing section 24, the imaging condition control section 25, and a captured image acquisition section 29.

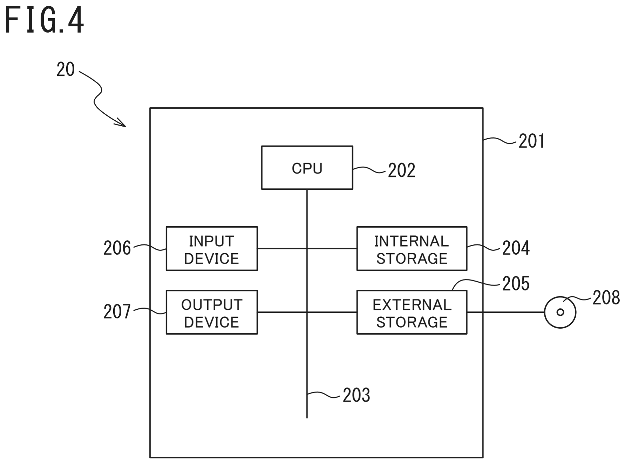

A hardware configuration of the control device 20 will be described with reference to FIG. 4. The control device 20 is constituted by an arithmetic processing unit 201 including a CPU 202. An internal storage 204 such as a RAM or a ROM, an external storage 205, an input device 206 such as a keyboard or a mouse, and an output device 207 for outputting data of a captured image to the captured image output device 40 (see FIG. 2) are connected to the CPU 202 via an internal bus 203.

The external storage 205 of the control device 20 includes a readable disk drive such as a hard disk drive or a solid state drive, and a drive device for CDs, DVDs, BDs, or the like to read data from a recording medium. A recording medium 208 storing a program is set in the external storage 205 to install the program read therefrom into the disk drive. The program causes the control device 20 to execute an image acquisition function by the image acquisition section 21, a scrap detection function by the scrap detecting section 22, a position specifying function by the position specifying section 23, a speed detection function by the speed detecting section 26, a determination function by the determination section 27, an imaging timing control function by the imaging timing control section 28, an imaging condition computing function by the imaging condition computing section 24, an imaging condition control function by the imaging condition control section 25, and a captured image acquisition function by the captured image acquisition section 29 (steps S2 to S11 described later). The installation of the program is not limited to the case where the recording medium 208 is used and may be performed by downloading the program via a network.

In response to a command of the installed program, the CPU 202 of the control device 20 executes the image acquisition function, the scrap detection function, the position specifying function, the speed detection function, the determination function, the imaging timing control function, the imaging condition computing function, the imaging condition control function, and the captured image acquisition function (steps S2 to S11 described later), and outputs data of the captured image to the captured image output device 40.

Here, the image acquisition section 21 of the control device 20 (the conveyance speed detecting unit 10) acquires a plurality of images of the whole area A of the scrap yard, captured by the visible camera 11.

The scrap detecting section 22 of the control device 20 (the conveyance speed detecting unit 10) performs image processing on the plurality of images of the whole area A of the scrap yard, captured by the visible camera 11, that is, the plurality of images acquired by the image acquisition section 21 so as to detect the scrap S in each of the plurality of images. More specifically, the scrap detecting section 22 inputs the plurality of images acquired by the image acquisition section 21 into a scrap detection model generated by a model generation section (not illustrated) and determines whether or not the scrap S is detected in each of the plurality of images. The scrap detection model is a model obtained by machine learning using image data of the scrap S moving in the whole area A of the scrap yard, as training data.

The position specifying section 23 of the control device 20 (the conveyance speed detecting unit 10) specifies the position (coordinates) of the scrap S, detected by the scrap detecting section 22, in each of the plurality of images. That is, in a case where it is determined that the scrap S is detected in each of the plurality of images by the scrap detecting section 22, the position (coordinates) of the scrap S in each of the plurality of images is specified. The position specifying section 23 may specify the position (coordinates) of the dump truck 50 conveying the scrap S in each of the plurality of images, instead of the scrap S. In this case, the position specifying section 23 estimates the position (coordinates) of the scrap S on the dump truck 50 from the position of the dump truck 50.

The imaging condition computing section 24 of the control device 20 computes and determines imaging conditions for the PTZ camera 30, such as an imaging direction and a zoom ratio, based on the position of the scrap S in each of the plurality of images which position is specified by the position specifying section 23.

The imaging condition control section 25 of the control device 20 controls the PTZ camera 30 to track the scrap S under the imaging conditions for the PTZ camera 30 which imaging conditions are determined by the imaging condition computing section 24.

In the meantime, the speed detecting section 26 of the control device 20 (the conveyance speed detecting unit 10) detects the conveyance speed of the scrap S based on the change in the position of the scrap S across the plurality of images which position is specified by the position specifying section 23 of the conveyance speed detecting unit 10. More specifically, the conveyance speed of the scrap S may be an absolute speed of the scrap S or may be a relative speed of the scrap S to the PTZ camera 30. In a case where the conveyance speed of the scrap S is the absolute speed of the scrap S, the conveyance speed of the scrap S is a value obtained by dividing the change in the position of the scrap across the plurality of images which position is specified by the position specifying section 23 by the time interval between a plurality of image-captures by the visible camera 11. In the meantime, in a case where the conveyance speed of the scrap S is the relative speed of the scrap S to the PTZ camera 30, the conveyance speed of the scrap S is a value obtained by subtracting the panning speed of the PTZ camera 30 from the value obtained by dividing the change in the position of the scrap across the plurality of images which position is specified by the position specifying section 23 by the time interval between the plurality of image-captures by the visible camera 11.

The determination section 27 of the control device 20 determines whether or not the conveyance speed of the scrap S, detected by the speed detecting section 26 of the conveyance speed detecting unit 10, is equal to or lower than a predetermined value. Here, the "predetermined value" is set appropriately in consideration of the performance or the like of the camera. However, in the case where the conveyance speed of the scrap S is the absolute speed of the scrap S, for example, the predetermined value is preferably 10 m/s, more preferably 5 m/s, and particularly preferably 0 m/s, which is a state where the scrap S stops. As illustrated in FIG. 1, when the dump truck 50 stops in the scrap yard, the scrap S is assumed to stop, so that the determination section 27 determines that the conveyance speed of the scrap S is equal to or lower than the predetermined value. In a case where the conveyance speed of the scrap S is the relative speed of the scrap S to the PTZ camera 30, the "predetermined value" is preferably 2 m/s, more preferably 1 m/s, and particularly preferably 0 m/s, which is a state where the conveyance speed of the scrap S is the same speed as the panning speed of the PTZ camera 30.

When the determination section 27 determines that the conveyance speed of the scrap S is equal to or lower than the predetermined value, the imaging timing control section 28 of the control device 20 controls the PTZ camera 30 as the imaging device to capture an image of the scrap S.

The PTZ camera 30 is controlled by the imaging condition control section 25 to track the scrap S as previously described, but when the determination section 27 determines that the conveyance speed of the scrap S is equal to or lower than the predetermined value, the PTZ camera 30 is controlled by the imaging timing control section 28 to capture an image of the scrap S such that the PTZ camera 30 captures an image of the scrap S under the imaging conditions for the PTZ camera 30, such as the imaging direction and the zoom ratio, determined by the imaging condition computing section 24.

Then, the captured image acquisition section 29 of the control device 20 acquires the captured image of the scrap S, captured by the PTZ camera 30, and outputs data of the captured image of the scrap S to the captured image output device 40.

The captured image output device 40 outputs the captured image of the scrap S based on the data of the captured image of the scrap S, output from the captured image acquisition section 29. In a case where the captured image output device 40 is constituted by a display, the captured image output device 40 displays the captured image of the scrap S. The captured image output device 40 is not limited to the case where the captured image output device 40 is constituted by a display and displays the captured image of the scrap S, and the captured image output device 40 may be constituted by a printer and print the captured image of the scrap S or may transmit the captured image of the scrap S to other devices via a network.

The captured image of the scrap S, output from the captured image output device 40, is input into a scrap image utilization device (not illustrated), and the scrap image utilization device performs at least any of grade determination of the scrap S, detection of an unwanted material, and estimation of the chemical composition of the scrap S.

The captured image output device 40 may be connected to the scrap image utilization device, and the captured image of the scrap S from the captured image output device 40 may be automatically input into the scrap image utilization device, so that the scrap image utilization device automatically performs at least any of grade determination of the scrap S, detection of an unwanted material, and estimation of the chemical composition of the scrap S.

Here, in case of the grade determination of the scrap S, the scrap image utilization device performs the grade determination of the scrap S by inputting the captured image of the scrap S from the captured image output device 40 into a grade determination model trained in advance using images of the scrap S to enable the grade determination.

In case of the detection of an unwanted material, the scrap image utilization device detects an unwanted material by inputting the captured image of the scrap S from the captured image output device 40 into an unwanted material detection model trained in advance using images of the scrap S to enable the detection of an unwanted material.

In case of the estimation of the chemical composition of the scrap S, the scrap image utilization device identifies the type of the scrap S in the captured image by inputting the captured image of the scrap S from the captured image output device 40 into a type identification model trained in advance using images of the scrap S to enable the identification of the type of the scrap S. Then, the scrap image utilization device estimates the chemical composition of the scrap S in the captured image based on the proportion of each type of the scrap S and the known composition of each type. Accordingly, the composition of the scrap S can be estimated before the scrap S is melted in a melting furnace, thereby making it possible to effectively manufacture metal products with a composition ratio closer to an intended ratio.

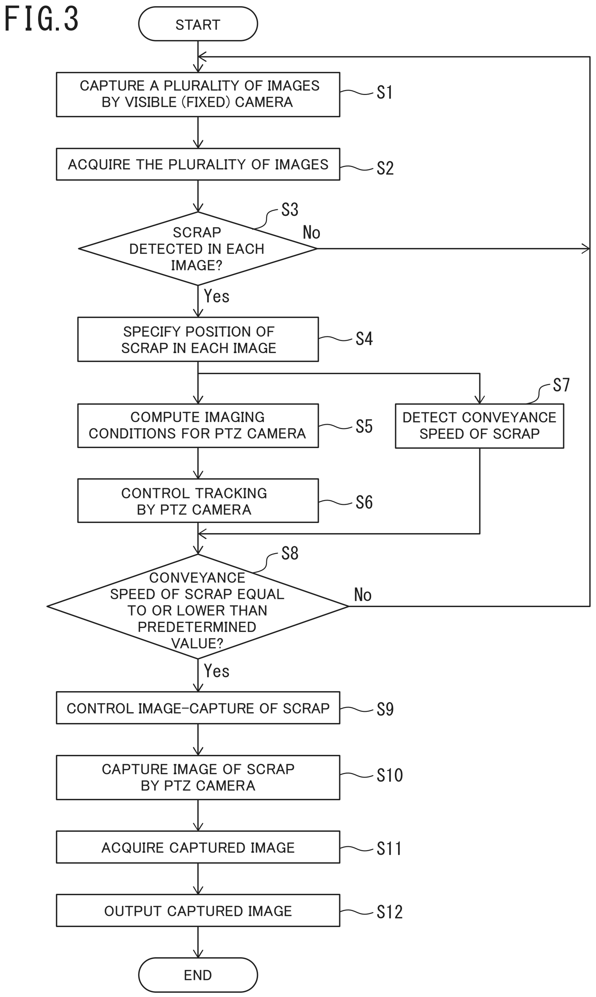

Next will be described the flow of a process in the automatic imaging system 1 with reference to FIG. 3. FIG. 3 is a flowchart to describe the flow of the process in the automatic imaging system illustrated in FIG. 1.

First, in step S1, the visible camera 11 of the conveyance speed detecting unit 10 captures a plurality of images of the whole area A of the scrap yard as an imaging target (a fixed imaging step).

Subsequently, in step S2, the image acquisition section 21 of the control device 20 (the conveyance speed detecting unit 10) acquires the plurality of images of the whole area A of the scrap yard, captured in step S1 (an image acquisition step).

Subsequently, in step S3, the scrap detecting section 22 of the control device 20 (the conveyance speed detecting unit 10) determines whether or not the scrap S is detected in each of the plurality of images of the whole area A of the scrap yard, acquired in step S2 (a scrap detecting step).

When the determination result in step S3 is YES, the process advances to step S4, and when the determination result is NO, the process returns to step S1.

In step S4, the position specifying section 23 of the control device 20 (the conveyance speed detecting unit 10) specifies the position (coordinates) of the scrap S in each of the plurality of images, detected in step S3 (a position specifying step).

After step S4 is finished, step S5 and step S7 are performed at the same time.

In step S5, the imaging condition computing section 24 of the control device 20 computes and determines imaging conditions for the PTZ camera 30, such as an imaging direction and a zoom ratio, based on the position of the scrap S in each of the plurality of images, specified in step S4 (an imaging condition computing step).

Subsequently, in step S6, the imaging condition control section 25 of the control device 20 controls the PTZ camera 30 to track the scrap S under the imaging conditions for the PTZ camera 30, determined in step S5 (an imaging condition control step). Then, the process advances to step S8 (a determination step) to be described later.

In the meantime, in step S7, the speed detecting section 26 of the control device 20 (the conveyance speed detecting unit 10) detects the conveyance speed of the scrap S based on the change in the position of the scrap S across the plurality of images, specified in step S4 (a speed detecting step). More specifically, the conveyance speed of the scrap S may be the absolute speed of the scrap S or may be the relative speed of the scrap S to the PTZ camera 30. In the case where the conveyance speed of the scrap S is the absolute speed of the scrap S, the conveyance speed of the scrap S is a value obtained by dividing the change in the position of the scrap S across the plurality of images which position is specified in step S4 by the time interval between the plurality of image-captures by the visible camera 11. In the meantime, in the case where the conveyance speed of the scrap S is the relative speed of the scrap S to the PTZ camera 30, the conveyance speed of the scrap S is a value obtained by subtracting the panning speed of the PTZ camera 30 from the value obtained by dividing the change in the position of the scrap S across the plurality of images which position is specified in step S4 by the time interval between the plurality of image-captures by the visible camera 11.

A conveyance speed detecting step is constituted by step S1 (the fixed imaging step), step S2 (the image acquisition step), step S3 (the scrap detecting step), step S4 (the position specifying step), and step S7 (the speed detecting step).

Subsequently, in step S8, the determination section 27 of the control device 20 determines whether or not the conveyance speed of the scrap S, detected in step S7, is equal to or lower than a predetermined value (a determination step). Here, the "predetermined value" is set appropriately in consideration of the performance or the like of the camera, but in the case where the conveyance speed of the scrap S is the absolute speed of the scrap S, for example, the predetermined value is preferably 10 m/s, more preferably 5 m/s, and particularly preferably 0 m/s, which is a state where the scrap S stops. In the meantime, in the case where the conveyance speed of the scrap S is the relative speed of the scrap S to the PTZ camera 30, the "predetermined value" is preferably 2 m/s, more preferably 1 m/s, and particularly preferably 0 m/s, which is a state where the conveyance speed of the scrap S is the same speed as the panning speed of the PTZ camera 30.

When the determination result in step S8 is YES (when the conveyance speed of the scrap S is equal to or lower than the predetermined value), the process advances to step S9, and when the determination result is NO, the process returns to step S1.

In step S9, the imaging timing control section 28 of the control device 20 controls the PTZ camera 30 as the imaging device to capture an image of the scrap S (an imaging control step).

Subsequently, in step S10, the PTZ camera 30 captures an image of the scrap S under the imaging conditions for the PTZ camera 30, such as the imaging direction and the zoom ratio, determined in step S5 (a scrap imaging step).

Subsequently, in step S11, the captured image acquisition section 29 of the control device 20 acquires the captured image of the scrap S, captured in step S10, and outputs data of the captured image of the scrap S to the captured image output device 40 (a captured image acquisition step).

Finally, in step S12, the captured image output device 40 outputs the captured image of the scrap S based on the data of the captured image of the scrap S, output in step S11.

As described above, the automatic imaging system 1 according to the first embodiment includes: the PTZ camera 30 as the imaging device configured to capture an image of the scrap S; the conveyance speed detecting unit 10 configured to detect the conveyance speed of the scrap S; and the control device 20 configured to determine whether or not the conveyance speed of the scrap S, detected by the conveyance speed detecting unit 10, is equal to or lower than the predetermined value and to control the PTZ camera 30 as the imaging device to capture an image of the scrap S when it is determined that the conveyance speed of the scrap S is equal to or lower than the predetermined value.

Accordingly, the PTZ camera 30 as the imaging device captures an image of the scrap S when the conveyance speed of the scrap S becomes equal to or lower than the predetermined value, so that it is possible to capture a high-quality image of the scrap S with no risk of image blurring at a given position during conveyance of the scrap S. With the use of such a high-quality image of the scrap S, it is possible to accurately perform grade determination of the scrap S, detection of an unwanted material, and estimation of the chemical composition of the scrap S.

Besides, in the automatic imaging system 1 according to the first embodiment, the imaging device is the PTZ camera 30 capable of panning at a predetermined speed. Accordingly, the PTZ camera 30 pans to track the scrap S in motion, so that the PTZ camera 30 can accurately capture an image of the scrap S in motion.

In the automatic imaging system 1 according to the first embodiment, the conveyance speed detecting unit 10 includes: the visible camera 11 fixed and configured to capture a plurality of images of an imaging target; the scrap detecting section 22 configured to perform image processing on the plurality of images captured by the visible camera 11 and detect the scrap S in each of the plurality of images; the position specifying section 23 configured to specify the position of the scrap S detected in each of the plurality of images by the scrap detecting section 22; and the speed detecting section 26 configured to detect the conveyance speed of the scrap S based on the change in the position of the scrap S across the plurality of images which position is specified by the position specifying section 23.

Since two cameras, i.e., the visible camera 11 constituting the conveyance speed detecting unit 10 and the PTZ camera 30 as the imaging device for capturing an image of the scrap S, are used properly, the position of the scrap S and the conveyance speed of the scrap S can be detected accurately.

In the automatic imaging system 1 according to the first embodiment, the control device 20 includes: the imaging condition computing section 24 configured to compute and determine imaging conditions for the PTZ camera 30 as the imaging device based on the position of the scrap S in each of the plurality of images which position is specified by the position specifying section 23 of the conveyance speed detecting unit 10; and the imaging condition control section 25 configured to control the PTZ camera 30 to track the scrap S under the imaging conditions for the PTZ camera 30 which imaging conditions are determined by the imaging condition computing section 24.

This makes it possible to control the PTZ camera 30 to appropriately track the scrap S in response to the position of the scrap S.

An automatic imaging method according to the first embodiment includes: a conveyance speed detecting step (step S1, step S2, step S3, step S4, and step S7) of the conveyance speed detecting unit 10 detecting the conveyance speed of the scrap S; a determination step (step S8) of the control device 20 determining whether or not the conveyance speed of the scrap S which conveyance speed is detected in the conveyance speed detecting step is equal to or lower than a predetermined value; and an imaging control step (step S9) of the control device 20 controlling the PTZ camera 30 as the imaging device to capture an image of the scrap when it is determined, in the determination step, that the conveyance speed of the scrap S is equal to or lower than the predetermined value.

In this configuration, the PTZ camera 30 as the imaging device captures an image of the scrap S when the conveyance speed of the scrap S becomes equal to or lower than the predetermined value, so that it is possible to capture a high-quality image of the scrap S with no risk of image blurring at a given position during conveyance of the scrap S. With the use of such a high-quality image of the scrap S, it is possible to accurately perform grade determination of the scrap S, detection of an unwanted material, and estimation of the chemical composition of the scrap S.

A program according to the first embodiment is a program causing the control device 20 to execute: the determination step (step S8) of determining whether or not the conveyance speed of the scrap S which conveyance speed is detected by the conveyance speed detecting unit 10 is equal to or lower than the predetermined value; and the imaging control step (step S9) of controlling the PTZ camera 30 as the imaging device to capture an image of the scrap S when it is determined, in the determination step, that the conveyance speed of the scrap S is equal to or lower than the predetermined value.

In this configuration, an image of the scrap S is captured when the conveyance speed of the scrap S becomes equal to or lower than the predetermined value, so that it is possible to capture a high-quality image of the scrap S with no risk of image blurring at a given position during conveyance of the scrap S.

The computer-readable recording medium 208 storing the program according to the first embodiment is the computer-readable recording medium 208 storing a program causing the control device 20 to execute: the determination step (step S8) of determining whether or not the conveyance speed of the scrap S which conveyance speed is detected by the conveyance speed detecting unit 10 is equal to or lower than the predetermined value; and the imaging control step (step S9) of controlling the PTZ camera 30 as the imaging device to capture an image of the scrap S when it is determined, in the determination step, that the conveyance speed of the scrap S is equal to or lower than the predetermined value.

In this configuration, an image of the scrap S is captured when the conveyance speed of the scrap S becomes equal to or lower than the predetermined value, so that it is possible to capture a high-quality image of the scrap S with no risk of image blurring at a given position during conveyance of the scrap S.

### (Second Embodiment)

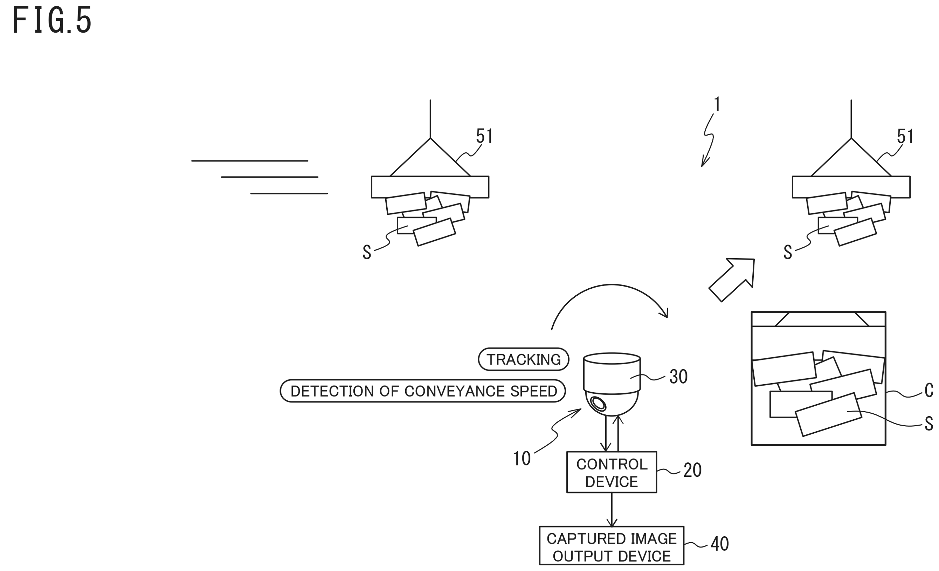

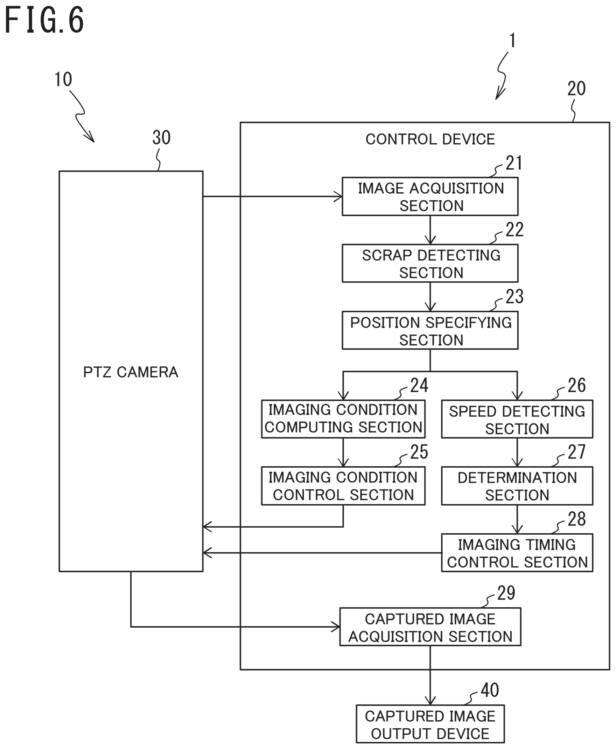

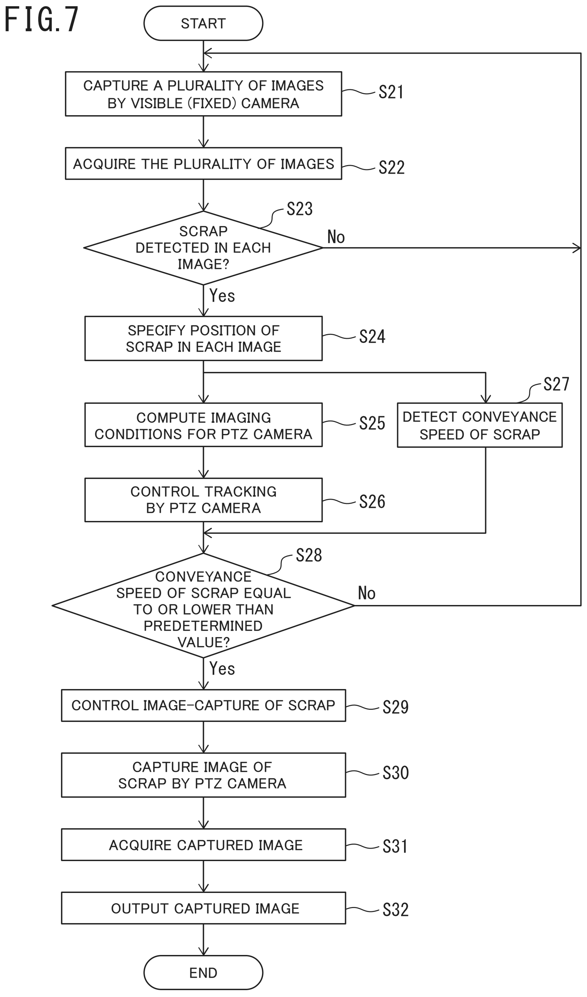

Next will be described an automatic imaging system, an automatic imaging method, a program, and a computer-readable recording medium storing the program according to a second embodiment of the present invention, with reference to Figs. 5 to 7. FIG. 5 is an overall configuration diagram of the automatic imaging system according to the second embodiment of the present invention. FIG. 6 is a functional block diagram of the automatic imaging system illustrated in FIG. 5. FIG. 7 is a flowchart to describe the flow of a process in the automatic imaging system illustrated in FIG. 5.

The automatic imaging system 1 illustrated in FIG. 5 is configured to automatically capture an image of the scrap S that is conveyed and moved by a lifting magnet 51 as a conveyance unit.

Similarly to the automatic imaging system 1 according to the first embodiment illustrated in FIG. 1, the automatic imaging system 1 includes the PTZ camera 30 as an imaging device configured to capture an image of the scrap S, the conveyance speed detecting unit 10 configured to detect the conveyance speed of the scrap S, the control device 20, and the captured image output device 40.

Here, the PTZ camera 30 has a PTZ function and is capable of panning horizontally and vertically at a predetermined speed by remote control. The PTZ camera 30 also has a zoom in/out function and captures an image of the scrap S. The PTZ camera 30 is controlled by the imaging condition control section 25 (see FIG. 6) to track the scrap S under the imaging conditions for the PTZ camera 30 which imaging conditions are determined by the imaging condition computing section 24 (see FIG. 6) (described later) of the control device 20. The PTZ camera 30 is controlled by the imaging timing control section 28 to capture an image of the scrap S when the determination section 27 (described later) of the control device 20 determines that the conveyance speed of the scrap S is equal to or less than a predetermined value, in such a manner that the PTZ camera 30 captures an image of the scrap S under the imaging conditions for the PTZ camera 30, such as the imaging direction and the zoom ratio, determined by the imaging condition computing section 24 (see FIG. 6). In the present embodiment, as illustrated in FIG. 5, the PTZ camera 30 captures an image of an imaging region C where the scrap S is suspended by the lifting magnet 51 at the time when the lifting magnet 51 stops and the conveyance speed of the scrap S conveyed by the lifting magnet 51 becomes 0 m/s.

The conveyance speed detecting unit 10 detects the conveyance speed of the scrap S. However, unlike the conveyance speed detecting unit 10 in the automatic imaging system 1 according to the first embodiment, as illustrated in FIGS. 5, 6, the conveyance speed detecting unit 10 in the present embodiment is constituted by the PTZ camera 30 serving as the imaging device, capable of panning at a predetermined speed, and configured to pan and capture a plurality of images of the scrap S in motion as an imaging target, and the image acquisition section 21, the scrap detecting section 22, the position specifying section 23, and the speed detecting section 26 (described later) of the control device 20.

The PTZ camera 30 pans and captures a plurality of images of the scrap S that is conveyed and moved by the above-mentioned lifting magnet 51 before the PTZ camera 30 captures an image of the imaging region C where the lifting magnet 51 stops with the scrap S suspended therefrom. When the PTZ camera 30 pans and captures a plurality of images of the scrap S in motion, the plurality of images of the scrap S in motion can be obtained. Based on the plurality of images of the scrap S obtained, the conveyance speed of the scrap S is detected by the image acquisition section 21, the scrap detecting section 22, the position specifying section 23, and the speed detecting section 26 of the control device 20. Detailed configurations and functions of the image acquisition section 21, the scrap detecting section 22, the position specifying section 23, and the speed detecting section 26 of the control device 20 will be described later.

Since the PTZ camera 30 as the imaging device is also used as a camera constituting the conveyance speed detecting unit 10, detection of the position of the scrap S, detection of the conveyance speed of the scrap S, and image-capture of the scrap S can be performed by a single camera.

The control device 20 has a function to determine whether or not the conveyance speed of the scrap S, detected by the conveyance speed detecting unit 10, is equal to or lower than a predetermined value and to control the PTZ camera 30 as the imaging device to capture an image of the scrap S when it is determined that the conveyance speed of the scrap S is equal to or lower than the predetermined value. The control device 20 also has a function to compute and determine imaging conditions for the PTZ camera 30 as the imaging device based on the position of the scrap S in each image which position is specified by the position specifying section 23 of the conveyance speed detecting unit 10 and to control the PTZ camera 30 to track the scrap S under the determined imaging conditions for the PTZ camera 30. The control device 20 also has a function to output a captured image, captured by the PTZ camera 30, to the captured image output device 40.

As illustrated in FIG. 6, the control device 20 includes the image acquisition section 21, the scrap detecting section 22, the position specifying section 23, and the speed detecting section 26 constituting the conveyance speed detecting unit 10. The control device 20 also includes the determination section 27 and the imaging timing control section 28. The control device 20 also includes the imaging condition computing section 24, the imaging condition control section 25, and the captured image acquisition section 29.

The control device 20 has a hardware configuration similar to that illustrated in FIG. 4 and therefore is not described herein. The recording medium 208 storing a program is set in the external storage 205 of the control device 20 to install the program read therefrom into the disk drive. The program causes the control device 20 to execute an image acquisition function by the image acquisition section 21, a scrap detection function by the scrap detecting section 22, a position specifying function by the position specifying section 23, a speed detection function by the speed detecting section 26, a determination function by the determination section 27, an imaging timing control function by the imaging timing control section 28, an imaging condition computing function by the imaging condition computing section 24, an imaging condition control function by the imaging condition control section 25, and a captured image acquisition function by the captured image acquisition section 29 (steps S22 to S31 described later). The installation of the program is not limited to the case where the recording medium 208 is used and may be performed by downloading the program via a network.

The image acquisition section 21 of the control device 20 (the conveyance speed detecting unit 10) acquires a plurality of images of the scrap S in motion, captured by the PTZ camera 30 of the conveyance speed detecting unit 10.

The scrap detecting section 22 of the control device 20 (the conveyance speed detecting unit 10) performs image processing on the plurality of images of the scrap S in motion, captured by the PTZ camera 30, that is, the plurality of images acquired by the image acquisition section 21, so as to detect the scrap S in each of the plurality of images. More specifically, the scrap detecting section 22 inputs the plurality of images acquired by the image acquisition section 21 into a scrap detection model generated by a model generation section (not illustrated) and determines whether or not the scrap S is detected in each of the plurality of images.

The position specifying section 23 of the control device 20 (the conveyance speed detecting unit 10) specifies the position (coordinates) of the scrap S, detected by the scrap detecting section 22, in each of the plurality of images. That is, in a case where it is determined that the scrap S is detected in each of the plurality of images by the scrap detecting section 22, the position (coordinates) of the scrap S in each of the plurality of images is specified. The position specifying section 23 may specify the position (coordinates) of the lifting magnet 51 conveying the scrap S in each of the plurality of images, instead of the scrap S. In this case, the position specifying section 23 estimates the position (coordinates) of the scrap S on the lower side of the lifting magnet 51, based on the position of the lifting magnet 51.

The imaging condition computing section 24 of the control device 20 computes and determines imaging conditions for the PTZ camera 30 as the imaging device, such as an imaging direction and a zoom ratio, based on the position of the scrap S in each of the plurality of images which position is specified by the position specifying section 23.

The imaging condition control section 25 of the control device 20 controls the PTZ camera 30 to track the scrap S under the imaging conditions for the PTZ camera 30 which imaging conditions are determined by the imaging condition computing section 24.

In the meantime, the speed detecting section 26 of the control device 20 (the conveyance speed detecting unit 10) detects the conveyance speed of the scrap S based on the positions of the scrap S in the plurality of images which positions are specified by the position specifying section 23, and the panning speed of the PTZ camera 30. More specifically, the conveyance speed of the scrap S may be an absolute speed of the scrap S or may be a relative speed of the scrap S to the PTZ camera 30. The following describes a case where the conveyance speed of the scrap S is the absolute speed of the scrap S. Since the scrap detecting section 22 detects the scrap S in each of the plurality of images of the scrap S in motion, captured by the PTZ camera 30, and the position specifying section 23 specifies the position (coordinates) of the scrap S in each of the plurality of images which scrap S is detected by the scrap detecting section 22, the PTZ camera 30 is considered to be capable of tracking the scrap S, and the speed detecting section 26 calculates the panning speed of the PTZ camera 30 at this time. The calculated panning speed of the PTZ camera 30 is the conveyance speed (the absolute speed) of the scrap S. In the meantime, in a case where the conveyance speed of the scrap S is the relative speed of the scrap S to the PTZ camera 30, a difference between the panning speed of the PTZ camera 30 and the conveyance speed of the scrap S is estimated based on the change in the position of the scrap S across the plurality of images which position is specified by the position specifying section 23, and the difference in speed thus estimated is the conveyance speed (the relative speed) of the scrap S.

The determination section 27 of the control device 20 determines whether or not the conveyance speed of the scrap S, detected by the speed detecting section 26 of the conveyance speed detecting unit 10, is equal to or lower than a predetermined value. Here, the "predetermined value" is set appropriately in consideration of the performance or the like of the camera, but in the case where the conveyance speed of the scrap S is the absolute speed of the scrap S, for example, the predetermined value is preferably 10 m/s, more preferably 5 m/s, and particularly preferably 0 m/s, which is a state where the scrap S stops. In the meantime, in the case where the conveyance speed of the scrap S is the relative speed of the scrap S to the PTZ camera 30, the "predetermined value" is preferably 2 m/s, more preferably 1 m/s, and particularly preferably 0 m/s, which is a state where the conveyance speed of the scrap S is the same speed as the panning speed of the PTZ camera 30.

When the determination section 27 determines that the conveyance speed of the scrap S is equal to or lower than the predetermined value, the imaging timing control section 28 of the control device 20 controls the PTZ camera 30 as the imaging device to capture an image of the scrap S.

The PTZ camera 30 is controlled by the imaging condition control section 25 to track the scrap S as previously described, but when the determination section 27 determines that the conveyance speed of the scrap S is equal to or lower than the predetermined value, the PTZ camera 30 is controlled by the imaging timing control section 28 to capture an image of the scrap S in such a manner that the PTZ camera 30 captures an image of the scrap S under the imaging conditions for the PTZ camera 30, such as the imaging direction and the zoom ratio, determined by the imaging condition computing section 24.

Then, the captured image acquisition section 29 of the control device 20 acquires the captured image of the scrap S, captured by the PTZ camera 30, and outputs data of the captured image of the scrap S to the captured image output device 40.

The captured image output device 40 outputs the captured image of the scrap S based on the data of the captured image of the scrap S, output from the captured image acquisition section 29.

The captured image of the scrap S, output from the captured image output device 40, is input into the scrap image utilization device (not illustrated), similarly to the first embodiment, and the scrap image utilization device performs at least any of grade determination of the scrap S, detection of an unwanted material, and estimation of the chemical composition of the scrap S.

Similarly to the first embodiment, the captured image output device 40 may be connected to the scrap image utilization device, and the captured image of the scrap S from the captured image output device 40 may be automatically input into the scrap image utilization device, so that the scrap image utilization device automatically performs at least any of grade determination of the scrap S, detection of an unwanted material, and estimation of the chemical composition of the scrap S.

Next will be described the flow of a process in the automatic imaging system 1 according to the second embodiment with reference to FIG. 7. FIG. 7 is a flowchart to describe the flow of the process in the automatic imaging system illustrated in FIG. 5.

First, in step S21, the PTZ camera 30 of the conveyance speed detecting unit 10 pans and captures a plurality of images of the scrap S as an imaging target that is conveyed and moved by the lifting magnet 51 (a panning imaging step).

Subsequently, in step S22, the image acquisition section 21 of the control device 20 (the conveyance speed detecting unit 10) acquires the plurality of images of the scrap S in motion, captured in step S21 (an image acquisition step).

Subsequently, in step S23, the scrap detecting section 22 of the control device 20 (the conveyance speed detecting unit 10) determines whether or not the scrap S is detected in each of the plurality of images of the scrap S in motion, acquired in step S22 (a scrap detecting step).

When the determination result in step S23 is YES, the process advances to step S24, and when the determination result is NO, the process returns to step S21.

In step S24, the position specifying section 23 of the control device 20 (the conveyance speed detecting unit 10) specifies the position (coordinates) of the scrap S in each of the plurality of images, detected in step S23 (a position specifying step).

After step S24 is finished, step S25 and step S27 are performed at the same time.

In step S25, the imaging condition computing section 24 of the control device 20 computes and determines imaging conditions for the PTZ camera 30, such as the imaging direction and the zoom ratio, based on the position of the scrap S in each of the plurality of images, specified in step S24 (an imaging condition computing step).

Subsequently, in step S26, the imaging condition control section 25 of the control device 20 controls the PTZ camera 30 to track the scrap S under the imaging conditions for the PTZ camera 30, determined in step S25 (an imaging condition control step). Then, the process advances to step S28 (a determination step) to be described later.

In the meantime, in step S27, the speed detecting section 26 of the control device 20 (the conveyance speed detecting unit 10) detects the conveyance speed of the scrap S based on the positions of the scrap S in the plurality of images, specified in step S24, and the panning speed of the PTZ camera 30 (a speed detecting step). More specifically, in a case where the conveyance speed of the scrap S is the absolute speed of the scrap S, the scrap detecting section 22 detects the scrap S in each of the plurality of images of the scrap S in motion, captured by the PTZ camera 30, and the position specifying section 23 specifies the position (coordinates) of the scrap S in each of the plurality of images, detected by the scrap detecting section 22. Accordingly, the PTZ camera 30 is considered to be capable of tracking the scrap S, and the speed detecting section 26 calculates the panning speed of the PTZ camera 30 at this time. The calculated panning speed of the PTZ camera 30 is the conveyance speed (the absolute speed) of the scrap S. In the meantime, in a case where the conveyance speed of the scrap S is the relative speed of the scrap S to the PTZ camera 30, a difference between the panning speed of the PTZ camera 30 and the conveyance speed of the scrap S is estimated based on the change in the position of the scrap S across the plurality of images which position is specified by the position specifying section 23, and the difference in speed thus estimated is the conveyance speed (the relative speed) of the scrap S.

A conveyance speed detecting step is constituted by step S21 (the panning imaging step), step S22 (the image acquisition step), step S23 (the scrap detecting step), step S24 (the position specifying step), and step S27 (the speed detecting step).

Subsequently, in step S28, the determination section 27 of the control device 20 determines whether or not the conveyance speed of the scrap S, detected in step 2S7, is equal to or lower than a predetermined value (a determination step). Here, the "predetermined value" is set appropriately in consideration of the performance or the like of the camera, but in the case where the conveyance speed of the scrap S is the absolute speed of the scrap S, the predetermined value is preferably 10 m/s, more preferably 5 m/s, and particularly preferably 0 m/s, which is a state where the scrap S stops. In the meantime, in the case where the conveyance speed of the scrap S is the relative speed of the scrap S to the PTZ camera 30, the "predetermined value" is preferably 2 m/s, more preferably 1 m/s, and particularly preferably 0 m/s, which is a state where the conveyance speed of the scrap S is the same speed as the panning speed of the PTZ camera 30.

When the determination result in step S28 is YES (when the conveyance speed of the scrap S is equal to or lower than the predetermined value), the process advances to step S29, and when the determination result is NO, the process returns to step S21.

In step S29, the imaging timing control section 28 of the control device 20 controls the PTZ camera 30 as the imaging device to capture an image of the scrap S (an imaging control step).

Subsequently, in step S30, the PTZ camera 30 captures an image of the scrap S under the imaging conditions for the PTZ camera 30, such as the imaging direction and the zoom ratio, determined in step S25 (a scrap imaging step).

Subsequently, in step S31, the captured image acquisition section 29 of the control device 20 acquires the captured image of the scrap S, captured in step S10, and outputs data of the captured image of the scrap S to the captured image output device 40 (a captured image acquisition step).

Finally, in step S32, the captured image output device 40 outputs the captured image of the scrap S based on the data of the captured image of the scrap S, output in step S31.

Thus, the automatic imaging system 1 according to the second embodiment includes: the PTZ camera 30 as the imaging device configured to capture an image of the scrap S; the conveyance speed detecting unit 10 configured to detect the conveyance speed of the scrap S; and the control device 20 configured to determine whether or not the conveyance speed of the scrap S which conveyance speed is detected by the conveyance speed detecting unit 10 is equal to or lower than the predetermined value and to control the PTZ camera 30 as the imaging device to capture an image of the scrap S when the conveyance speed of the scrap S is determined to be equal to or lower than the predetermined value.

Accordingly, the PTZ camera 30 as the imaging device captures an image of the scrap S when the conveyance speed of the scrap S becomes equal to or lower than the predetermined value, so that it is possible to capture a high-quality image of the scrap S with no risk of image blurring at a given position during conveyance of the scrap S. With the use of such a high-quality image of the scrap S, it is possible to accurately perform grade determination of the scrap S, detection of an unwanted material, and estimation of the chemical composition of the scrap S.

In the automatic imaging system 1 according to the second embodiment, the imaging device is the PTZ camera 30 capable of panning at a predetermined speed. In this configuration, the PTZ camera 30 pans to track the scrap S in motion, so that the PTZ camera 30 can accurately capture an image of the scrap S in motion.

In the automatic imaging system 1 according to the second embodiment, the conveyance speed detecting unit 10 includes: the PTZ camera 30 capable of panning at a predetermined speed, serving as the imaging device, and configured to pan and capture a plurality of images of an imaging target; the scrap detecting section 22 configured to perform image processing on the plurality of images captured by the PTZ camera 30 and detect the scrap S in each of the plurality of images; the position specifying section 23 configured to specify the position of the scrap S in each of the plurality of images, detected by the scrap detecting section 22; and the speed detecting section 26 configured to detect the conveyance speed of the scrap S based on the position of the scrap S in each of the plurality of images which position is specified by the position specifying section 23, and the panning speed of the PTZ camera 30.

In this configuration, since the PTZ camera 30 as the imaging device is also used as a camera constituting the conveyance speed detecting unit 10, detection of the position of the scrap S, detection of the conveyance speed of the scrap S, and image-capture of the scrap S can be performed by a single camera.

In the automatic imaging system 1 according to the second embodiment, the control device 20 includes: the imaging condition computing section 24 configured to compute and determine imaging conditions for the PTZ camera 30 as the imaging device based on the position of the scrap S in each of the plurality of images which position is specified by the position specifying section 23 of the conveyance speed detecting unit 10; and the imaging condition control section 25 configured to control the PTZ camera 30 to track the scrap S under the imaging conditions for the PTZ camera 30 which imaging conditions are determined by the imaging condition computing section 24.

This makes it possible to control the PTZ camera 30 to appropriately track the scrap S in response to the position of the scrap S.

An automatic imaging method according to the second embodiment includes: a conveyance speed detecting step (step S21, step S22, step S23, step S24, and step S27) of the conveyance speed detecting unit 10 detecting the conveyance speed of the scrap S; the determination step (step S28) of the control device 20 determining whether or not the conveyance speed of the scrap S which conveyance speed is detected in the conveyance speed detecting step is equal to or lower than a predetermined value; and the imaging control step (step S29) of the control device 20 controlling the PTZ camera 30 as the imaging device to capture an image of the scrap when it is determined, in the determination step, that the conveyance speed of the scrap S is equal to or lower than the predetermined value.

In this configuration, the PTZ camera 30 as the imaging device captures an image of the scrap S when the conveyance speed of the scrap S becomes equal to or lower than the predetermined value, so that it is possible to capture a high-quality image of the scrap S with no risk of image blurring at a given position during conveyance of the scrap S. With the use of such a high-quality image of the scrap S, it is possible to accurately perform grade determination of the scrap S, detection of an unwanted material, and estimation of the chemical composition of the scrap S.

A program according to the second embodiment is a program causing the control device 20 to execute the determination step (step S28) of determining whether or not the conveyance speed of the scrap S which conveyance speed is detected by the conveyance speed detecting unit 10 is equal to or lower than the predetermined value; and the imaging control step (step S29) of controlling the PTZ camera 30 as the imaging device to capture an image of the scrap S when it is determined, in the determination step, that the conveyance speed of the scrap S is equal to or lower than the predetermined value.

In this configuration, an image of the scrap S is captured when the conveyance speed of the scrap S becomes equal to or lower than the predetermined value, so that it is possible to capture a high-quality image of the scrap S with no risk of image blurring at a given position during conveyance of the scrap S.

The computer-readable recording medium 208 storing the program according to the second embodiment is the computer-readable recording medium 208 storing a program causing the control device 20 to execute: the determination step (step S28) of determining whether or not the conveyance speed of the scrap S which conveyance speed is detected by the conveyance speed detecting unit 10 is equal to or lower than the predetermined value; and the imaging control step (step S29) of controlling the PTZ camera 30 as the imaging device to capture an image of the scrap S when it is determined, in the determination step, that the conveyance speed of the scrap S is equal to or lower than the predetermined value.

In this configuration, an image of the scrap S is captured when the conveyance speed of the scrap S becomes equal to or lower than the predetermined value, so that it is possible to capture a high-quality image of the scrap S with no risk of image blurring at a given position during conveyance of the scrap S.

### (Example of Image-capture of Scrap)

In the automatic imaging system 1 according to the first embodiment illustrated in FIG. 1, the imaging target is the scrap S unloaded at the scrap yard by raising the dump bed. In the automatic imaging system 1 according to the second embodiment illustrated in FIG. 5, the imaging target is the scrap S suspended from the lifting magnet 51 at the time when the lifting magnet 51 stops.

However, the image-capture of the scrap S in the present invention is not limited to this, and it is possible to capture an image of the scrap S at any time during receiving of the scrap S in the scrap yard, storage of the scrap S in the scrap yard, or discharge of the scrap S from the scrap yard.

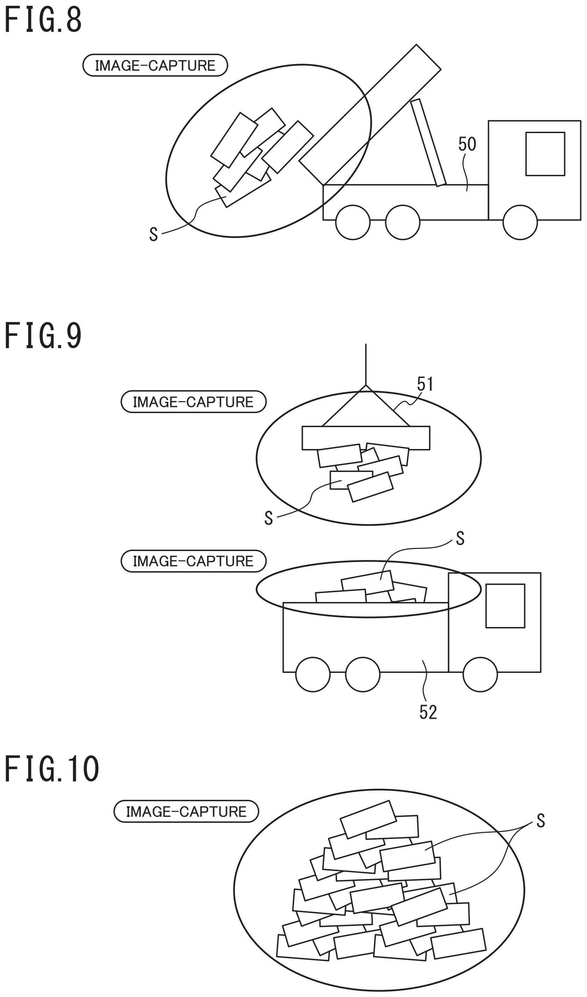

For example, in a case where an image of the scrap S is captured at the time of receiving of the scrap S in the scrap yard, an image of the scrap S being unloaded from the dump truck 50 may be captured, an image of the scrap S before the scrap S is unloaded from the dump truck 50 may be captured, or an image of the scrap S after the scrap S is unloaded from the dump truck 50 may be captured, as illustrated in FIG. 8.

In a case where an image of the scrap S is captured at the time of receiving of the scrap S in the scrap yard, when the scrap S conveyed by the semi-trailer 52 is lifted by the lifting magnet 51 as illustrated in FIG. 9, an image of the scrap S thus lifted by the lifting magnet 51 may be captured, or an image of the scrap S remaining in the semi-trailer 52 may be captured.

In a case where an image of the scrap S stored in the scrap yard is captured, an image of a pile of the scrap S stored in the scrap yard may be captured as illustrated in FIG. 10.

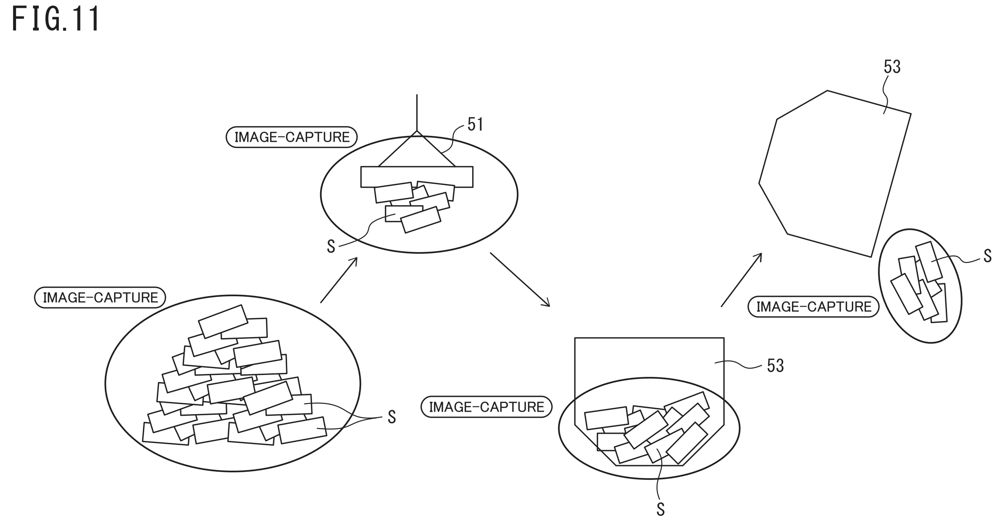

In a case where an image of the scrap S is captured at the time of discharging the scrap S from the scrap yard, when the scrap S is put into a furnace via the basket 53 from a pile of the scrap S as illustrated in FIG. 11, an image of the pile of the scrap S, an image of the scrap S lifted by the lifting magnet 51, an image of the scrap S put into the basket 53, and an image of the scrap S put into the furnace from the basket 53 may be captured.

The embodiments of the invention have been described above, but the present invention is not limited to them and can be performed with various alterations and modifications.

For example, as the conveyance speed detecting unit 10, the visible (fixed) camera 11 is used in the automatic imaging system 1 according to the first embodiment, and the PTZ camera 30 is used in the automatic imaging system 1 according to the second embodiment. However, the conveyance speed detecting unit 10 may be a speed sensor provided in the conveyance unit and configured to detect the conveyance speed of the scrap S. More specifically, the speed sensor is attached to the dump truck 50 or the lifting magnet 51 as the conveyance unit, and the speed of the dump truck 50 or the lifting magnet 51 is detected by the speed sensor. Then, the speed of the dump truck 50 or the lifting magnet 51 is assumed as the conveyance speed of the scrap S, and the PTZ camera 30 as the imaging device may be controlled to capture an image of the scrap S when the conveyance speed is equal to or lower than a predetermined value.

Alternatively, the speed of the scrap S or the conveyance unit may be detected by another speed detecting unit such as a speed measuring device provided outside the automatic imaging system 1.

The configuration of the automatic imaging system 1 according to the first embodiment and the configuration of the automatic imaging system 1 according to the second embodiment may be combined. More specifically, for example, in the first embodiment, the position of the scrap S and the conveyance speed of the scrap S are detected based on images captured by the visible (fixed) camera 11. However, only the position of the scrap S may be detected from the images captured by the visible (fixed) camera 11, and the conveyance speed of the scrap S may be detected based on the panning speed of the PTZ camera 30.

### Reference Signs List

1: automatic imaging system
10: conveyance speed detecting unit
11: visible (fixing) camera
20: control device
21: image acquisition section
22: scrap detecting section
23: position specifying section
24: imaging condition computing section
25: imaging condition control section
26: speed detecting section
27: determination section
28: imaging timing control section
29: captured image acquisition section
30: PTZ camera (imaging device)
40: captured image output device
50: dump truck (conveyance unit)
51: lifting magnet (conveyance unit)
201: arithmetic processing unit
202: CPU
203: internal bus
204: internal storage
205: external storage
206: input device
207: output device
208: recording medium
S: scrap

## Claims

1. An automatic imaging system for automatically capturing an image of scrap conveyed and moved by a conveyance unit, the automatic imaging system comprising:
an imaging device configured to capture an image of the scrap;
a conveyance speed detecting unit configured to detect a conveyance speed of the scrap; and
a control device configured to determine whether or not the conveyance speed of the scrap, detected by the conveyance speed detecting unit, is equal to or lower than a predetermined value and to control the imaging device to capture an image of the scrap when the conveyance speed of the scrap is determined to be equal to or lower than the predetermined value.

2. The automatic imaging system according to claim 1, wherein
the imaging device is a PTZ camera capable of panning at a predetermined speed.

3. The automatic imaging system according to claim 2, wherein
the conveyance speed detecting unit includes:
a visible camera configured to capture a plurality of images of an imaging target;
a scrap detecting section configured to perform image processing on the plurality of images captured by the visible camera and detect the scrap in each of the plurality of images;
a position specifying section configured to specify a position of the scrap, detected by the scrap detecting section, in the each of the plurality of images; and
a speed detecting section configured to detect the conveyance speed of the scrap based on a change in the position of the scrap across the plurality of images which position is specified by the position specifying section.

4. The automatic imaging system according to claim 2, wherein
the conveyance speed detecting unit includes:
a PTZ camera serving as the imaging device, capable of panning at a predetermined speed, and configured to pan and capture a plurality of images of an imaging target;
a scrap detecting section configured to perform image processing on the plurality of images captured by the PTZ camera and detect the scrap in each of the plurality of images;
a position specifying section configured to specify a position of the scrap, detected by the scrap detecting section, in the each of the plurality of images; and
a speed detecting section configured to detect the conveyance speed of the scrap based on the position of the scrap in the each of the plurality of images which position is specified by the position specifying section, and a panning speed of the PTZ camera.

5. The automatic imaging system according to claim 2, wherein
the conveyance speed detecting unit is a speed sensor provided in the conveyance unit and configured to detect the conveyance speed of the scrap.

6. The automatic imaging system according to claim 3 or 4, wherein
the control device includes:
an imaging condition computing section configured to compute and determine imaging conditions for the PTZ camera as the imaging device based on the position of the scrap in the each of the plurality of images which position is specified by the position specifying section of the conveyance speed detecting unit; and
an imaging condition control section configured to control the PTZ camera to track the scrap under the imaging conditions for the PTZ camera which imaging conditions are determined by the imaging condition computing section.

7. An automatic imaging method for automatically capturing an image of scrap that is conveyed and moved by a conveyance unit, the automatic imaging method comprising:
a conveyance speed detecting step of a conveyance speed detecting unit detecting a conveyance speed of the scrap;
a determination step of a control device determining whether or not the conveyance speed of the scrap which conveyance speed is detected in the conveyance speed detecting step is equal to or lower than a predetermined value; and
an imaging control step of the control device controlling an imaging device to capture an image of the scrap when it is determined, in the determination step, that the conveyance speed of the scrap is equal to or lower than the predetermined value.

8. A program causing a control device to execute:
a determination step of determining whether or not a conveyance speed of scrap which conveyance speed is detected by a conveyance speed detecting unit is equal to or lower than a predetermined value; and
an imaging control step of controlling an imaging device to capture an image of the scrap when it is determined, in the determination step, that the conveyance speed of the scrap is equal to or lower than the predetermined value.

9. A computer-readable recording medium storing a program causing a control device to execute:
a determination step of determining whether or not a conveyance speed of scrap which conveyance speed is detected by a conveyance speed detecting unit is equal to or lower than a predetermined value; and
an imaging control step of controlling an imaging device to capture an image of the scrap when it is determined, in the determination step, that the conveyance speed of the scrap is equal to or lower than the predetermined value.
